# EUROPÄISCHE PATENTSCHRIFT

(11) **EP 2 689 125 B1**
(45) Veröffentlichungstag und Bekanntmachung des Hinweises auf die Patenterteilung: **03.06.2015**
(21) Anmeldenummer: 12709881.2
(22) Anmeldetag: 19.03.2012
(51) Int. Cl.: F02M 25/07, F16K 31/04

(54) **KFZ-ABGASRÜCKFÜHRUNGS-VENTILANORDNUNG**
MOTOR VEHICLE EXHAUST-GAS RECIRCULATION VALVE ARRANGEMENT
SYSTÈME DE SOUPAPES DE RECYCLAGE DE GAZ D'ÉCHAPPEMENT D'UN VÉHICULE AUTOMOBILE

(30) Priorität: 24.03.2011 DE 102011001535
(43) Veröffentlichungstag der Anmeldung: 29.01.2014
(73) Patentinhaber: Pierburg GmbH, 41460 Neuss (DE)
(72) Erfinder: SIMONS, Norbert, 40233 Düsseldorf (DE)
(74) Vertreter: Patentanwälte ter Smitten Eberlein Rütten Partnerschaftsgesellschaft
(86) Internationale Anmeldenummer: PCT/EP2012/054777
(87) Internationale Veröffentlichungsnummer: WO 2012/126876

(56) Entgegenhaltungen:
- EP-A1- 1 526 271
- EP-A1- 2 172 682
- EP-A2- 1 270 905
- WO-A1-2010/043328
- DE-A1- 10 002 577
- DE-A1-102006 031 028
- FR-A1- 2 947 026
- KR-A- 20060 029 846

## Beschreibung

Die Erfindung betrifft eine Kfz-Abgasrückführungs-Ventilanordnung für eine Verbrennungskraftmaschine.

Mit Hilfe derartiger Ventilanordnungen zur Abgasrückführung wird die Entstehung von NOₓ bei Otto- oder Dieselmotoren verringert. Um dies zu erreichen, wird bei der geregelten Abgasrückführung ein Teil des Abgases über einen Kanal zurück zur Saugseite geführt und dort dem Frischgas beigemischt.

So ist aus der DE 10 2006 031 028 A1 eine Ventilanordnung für eine Abgasrückführung mit einem Antriebsmotor und einem Exzenterantrieb für die Hubbetätigung einer Ventilstange mit einem Ventilteller bekannt. Der Exzenterantrieb weist ein Kurvenbahmelement und ein Folgeelement auf, das an der Ventilstange gehalten ist. Ferner ist ein zweistufiges StirnradGetriebe mit mehreren Getriebeteilen vorgesehen. Der Antriebsmotor, die Getriebeteile und die Ventilstange sind in radialer Richtung nebeneinander angeordnet, wobei einige Getriebeteile zwischen dem Antriebsmotor und der Ventilstange liegen.

Nachteilig bei dieser Ventilanordnung ist zum einen die komplexe Ausführung der verschiedenen Getriebeteile, insbesondere des Kurvenbahnelementes, das als eine exzentrische Kurvenbahn ausgebildet ist, die als nutartige Innenbahn gestaltet ist. Dieses Kurvenbahnelement weist außerdem an seiner Außenseite eine aufwendig herzustellende Kontaktfläche auf, die als Reibfläche oder Bogenverzahnung ausgeführt ist.

Das Getriebe bzw. die Getriebeteile, der Antriebsmotor und die Ventilstange sind in einer Querrichtung nebeneinander angeordnet und erfordern viel Bauraum und erlauben keinen modularen Aufbau. Die große Quererstreckung quer zur Ventilachse führt außerdem zu starken Schwingungen und Vibrationen der gesamten Ventilanordnung und damit zu Verschleiß.

Aus KR 10 2006 0029846 ist eine Kfz-Abgasrückführungs-Ventilanordnung bekannt, bei der ein Antriebsmotor über sein Motorritzel eine Zwischenwelle antreibt, die ihrerseits wiederum über weitere Zahnräder eine Exzenterwelle antreibt. Die Exzenterwelle weist einen Exzenter auf, der eine Kulisse betätigt, die einstückiger Teil eines Ventiltriebes mit einer Ventilstange und einem Ventilteller ist. An dem Exzenterwellen-Antriebszahnrad ist eine Positionssensorik vorgesehen, die die Position des Exzenterwellen-Antriebszahnrades feststellt.

Aus DE 100 02577 A1 und EP 1 270 905 A2 sind weitere Kfz-Abgasrückführungs-Ventlianordnungen bekannt, bei denen über ein Getriebe und eine Exzenteranordnung ein Ventiltrieb angetrieben wird.

Aus DE 10 2006 031 028 A1 ist eine Abgasrückführungs-Ventilanordnung bekannt, bei der der Exzenterwelle eine rotatorische Positionssensorik zugeordnet ist.

Aufgabe der Erfindung ist es, eine kompakte Kfz-Abgasrückführungs-Ventilanordnung mit günstiger Schwerpunktlage und zuverlässiger Sensorik zu schaffen.

Die Lösung dieser Aufgabe erfolgt erfindungsgemäß mit den Merkmalen des Patentanspruchs 1.

Die erfindungsgemäße Kfz-Abgasrückführungs-Ventilanordnung für eine Abgasrückführung einer Verbrennungskraftmaschine umfasst einen elektrischen Antriebsmotor mit einer Motorwelle und einem Motorritzel, das drehfest auf der Motorweile angeordnet ist. Die Kfz-Abgasrückführungs-Ventilanordnung weist zudem eine Zwischenwelle mit einem mit dem Motorritzel kämmenden Abtriebszahnrad auf, wobei das Abtriebszahnrad drehfest mit der Zwischenwelle verbunden ist und im Durchmesser größer als das Motorritzel der Motorwelle ist. Die Zwischenwelle, die parallel zur Motorwelle liegt, ist als Zwischenwellenritzel ausgebildet und kämmt mit einem auf einer Exzenterwelle liegenden Antriebszahnrad. Das Antriebszahnrad, dessen Durchmesser größer als der Durchmesser des Zwischenwellenritzels ist, ist koaxial und drehfest auf der Exzenterwelle angeordnet. Des Weiteren ist auf der Exzenterwelle ein nockenartiger Exzenter angeordnet. Die Kfz-Abgasrückführungs-Ventilanordnung weist außerdem einen Ventiltrieb mit einem Ventilteller, einer Ventilstange und einer Kulisse auf, wobei der Exzenter in die Kulisse eingreift. Die Zwischenwelle ist seitlich neben der Exzenterwelle derart angeordnet, dass der Exzenter und die Kulisse unmittelbar neben dem Antriebsmotor und innerhalb der Längserstreckung des Antriebsmotors in Richtung der Axialen des Antriebsmotors liegen. Ferner liegen keine weiteren Bauteile zwischen der Kulisse und dem Antriebsmotor. Somit wird eine einfache und kompakte Kfz-Abgasrückführungs-Ventilanordnung geschaffen, wobei durch die Lage des Exzenters und der Kulisse eine günstige Schwerpunktlage der gesamten Kfz-Abgasrückführungs-Ventilanordnung in Bezug auf die Ventilachse realisiert wird.

Eine Positionssensoranordnung, die die Position der Kulisse detektiert, ist in dem Getriebegehäuse angeordnet, das die Zwischenwelle und die Exzenterwelle einschließt. Hierdurch ist die wärmeempfindliche Positionssensoranordnung sehr weit entfernt und thermisch isoliert von den thermisch stark belasteten Bereichen der Kfz-Abgasrückführungs-Ventilanordnung angeordnet.

Die Positionssensoranordnung weist einen Linearsensor, insbesondere einen Hallsensor auf, der die translatorische Position der Kulisse detektiert. Hallsensoren zeichnen sich durch ihr berührungsloses Messprinzip aus, wodurch sie mechanisch sehr unempfindlich sind und dennoch eine hohle Messgenauigkeit aufweisen.

In einer bevorzugten Ausführungsform ist die Ventilstange in den mittleren zwei Vierteln der von einem Antriebsmotorgehäuse und einem Getriebegehäuse gebildeten Gesamt-Längserstreckung, insbesondere in dem mittleren Drittel angeordnet. Die Gesamt-Längserstreckung ergibt sich in Richtung der Axialen des Antriebsmotors. Eine derartige Anordnung führt dazu, dass der Hebelarm zwischen der Ventilachse und dem Schwerpunkt der Kfz-Abgasrückführungs-Ventilanordnung kurz gehalten wird, wodurch die Amplitude der Schwingungen der Ventilanordnung relativ klein ist.

Vorzugsweise ist der radiale Abstand zwischen der Ventilstange und dem Schwerpunkt der Kfz-Abgasrückführungs-Ventilanordnung geringer als ein Viertel der vom Antriebsmotorgehäuse und dem Getriebegehäuse gebildeten Gesamt-Längserstreckung. Hierdurch liegt die Ventilachse bzw. der Ventilstange sehr nah am Schwerpunkt der Kfz-Abgasrückführungs-Ventilanordnung, so dass zum einen eine günstige Schwerpunktlage erreicht wird, zum anderen die Amplitude der Schwingung der gesamten Anordnung gering ist. Bevorzugt liegt die Zwischenwellen-Achse innerhalb des Außendurchmessers des Antriebsmotors.

Im Folgenden wird unter Bezugnahme auf die Zeichnungen ein Ausführungsbeispiel der Erfindung näher erläutert.

Es zeigen:
- Figur 1: eine einfache Draufsicht einer erfindungsgemäßen Kfz-Abgasrückführungs-Ventilanordnung,
- Figur 2: eine Seitenansicht der erfindungsgemäßen Kfz-Abgasrückführungs-Ventilanordnung, und
- Figur 3: eine perspektivische Ansicht der erfindungsgemäßen Kfz-Abgasrückführungs-Ventilanordnung.

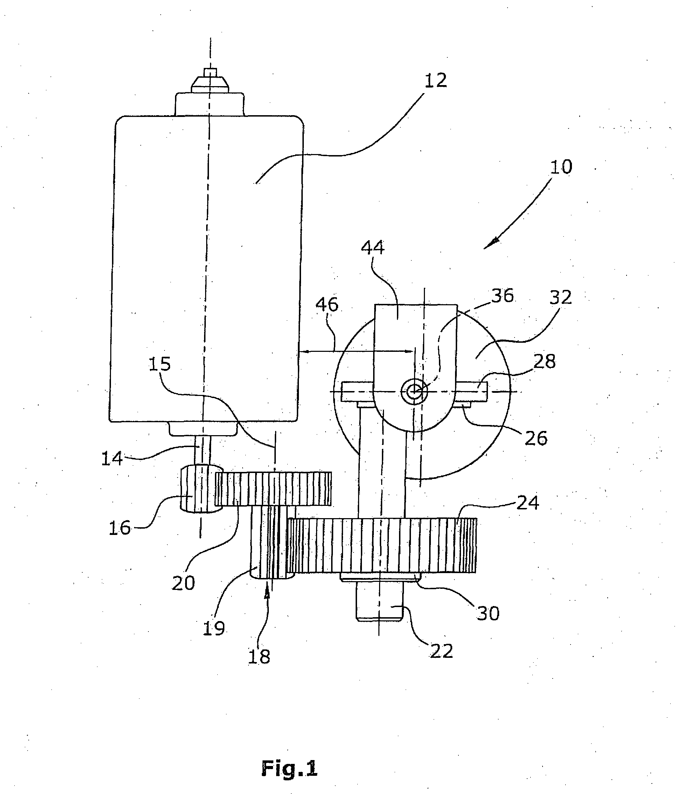

In Figur 1 ist eine Kfz-Abgasrückführungs-Ventilanordnung 10 gezeigt, die für die Anordnung in einem Abgasrückführstrang einer Verbrennungskraftmaschine bestimmt ist. Die Ventilanordnung 10 umfasst einen elektrischen Antriebsmotor 12, der von einem Gleichstrom-Elektromotor gebildet ist. Der Antriebsmotor 12 trägt auf seiner Motorwelle 14 ein Motorritzel 16, wobei das Motorritzel 16 mit einem Abtriebszahnrad 20 im Eingriff steht, welches drehfest mit einer Zwischenwelle 18 verbunden ist. Das Motorritzel 16 und das Abtriebszahnrad 20 sind jeweils als Stirnrad ausgebildet, wobei der Durchmesser des Abtriebszahnrades 20 größer als der Durchmesser des Motorritzels 16 der Motorwelle14 ist. Das Antriebszahnrad 20 und die Zwischenwelle 18 sind koaxial angeordnet und miteinander fest verbunden und beilspielsweise auf einem nicht dargestellten. Lagerbolzen gelagert.

Die Zwischenwelle 18 ist parallel zur Motorwelle 14 angeordnet und weist ein Zwischenwellenritzel 19 auf. Die Zwischenwelle 18 steht mit ihrem Zwischenwellenritzel 19 mit einem Antriebszahnrad 24 im Eingriff, welches im Durchmesser größer als das Zwischenwellenritzel 19 ist und drehfest auf einer Exzenterwelle 22 gelagert ist.

Das Antriebszahnrad 24 und die Exzenterwelle 22 sind koaxial angeordnet und fest miteinander verbunden. Zur Lagerung des Antriebszahnrades 24. auf der Exzenterwelle 22 ist außerdem ein Wälzlager 30 vorgesehen. Ebenso ist die Lagerung durch ein Gleitlager möglich. Die Exzenterwelle 22 ist parallel zur Drehachse der Motorwelle 14 und seitlich neben der Zwischenwelle 18 angeordnet und trägt einen nockenförmigen Exzenter 26, der in eine Kulisse 28 eingreift. Der Exzenter 26 und die Exzenterwelle 22 sind drehfest miteinander verbunden.

Die Kulisse 28 ist Teil des Ventiltriebs der Kfz-Abgasrückführungs-Ventilanordnung 10, der außerdem eine Ventilstange 34 mit einem Ventiltelier 32 zum Öffnen und Verschließen einer Ventilöffnung umfasst.

Die Kulisse 28, in die der Exzenter 26 eingreift, ist am oberen Ende der Ventilstange 34, die in Figur 1 nicht dargestellt ist, fest angeordnet. Durch Drehen der Exzenterwelle 22 bringt der Exzenter 26 eine Kraft auf die Kulisse 28 auf, wodurch eine translatorische Hubbewegung in Richtung der Ventilachse 36 der Ventilstange 34 ausgeführt wird.

Da die Zwischenwelle 18 seitlich neben der Exzenterwelle 22 angeordnet ist, liegen der Exzenter 26 und die Kulisse 28 unmittelbar neben dem Antriebsmotor 12 der Kfz-Abgasruckfuhrungs-Ventilanordnung 10. Des Weiteren liegt die Zwischenwellen-Achse 15 der Zwischenwelle 18 innerhalb des Außendurchmessers des Antriebsmotors 12. Hierdurch ist der radiale Abstand 46 der Ventilachse 36 bzw. der Ventilstange 34 zum Schwerpunkt der gesamten Kfz-Abgasrückführungs-Ventilanordnung 10 sehr klein gehalten. Es sind keine Bauteile zwischen dem Antriebsmotor 12 und dem Ventiltrieb vorgesehen.

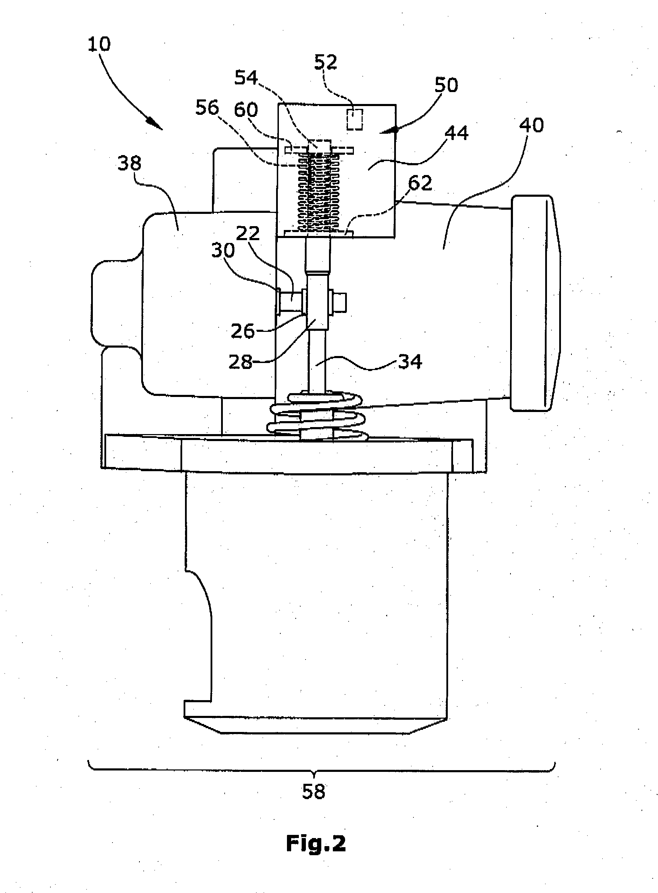

Figur 2 zeigt eine Seitensicht der Kfz-Abgasrückführungs-Ventilanordnung 10, wobei die Getriebeteile Motorritzel 16, Abtriebszahnrad 20, Zwischenwelle 18 und Antriebszahnrad 24 in Figur 2 nicht dargestellt sind, da diese innerhalb des Getriebegehäuses 38 angeordnet sind. Auch die Exzenterwelle 22 wird teilweise von dem Getriebegehäuse 38 mit eingeschlossen. Ferner ist der Antriebsmotor 12 in Figur 2 in einem Antriebsmotorgehäuse 40 angeordnet.

Das Getriebegehäuse 38 und das Antriebsmotorgehäuse 40 bilden in axialer Richtung des Antriebsmotors 12 die Gesamt-Längserstreckung 58 der Kfz-Abgasrückführungs-Ventilanordnung 10.

Wie in Figur 2 gut zu erkennen ist, liegt der Ventiltrieb, bestehend aus der Kulisse 28 und der damit fest verbundenen Ventilstange 34, innerhalb der Längserstreckung des Antriebsmotorgehäuses 40 in axialer Richtung des Antriebsmotors 12.

In dem in Figur 2 dargestellten Ausführungsbeispiel ist die Ventilstange 34 in dem mittleren Drittel der vom Antriebsmotorgehäuse 40 und dem Getriebegehäuse 38 gebildeten Gesamt-Längserstreckung 58 angeordnet.

Zur exakten Lagerückmeldung der translatorischen Position der Kulisse 28 bzw. der Ventilstange 34 ist eine Positionssensoranordnung 50 vorgesehen, die oberhalb der Kulisse 28 und zumindest teilweise innerhalb eines Sensorgehäuses 44 angeordnet ist.

Die Positionssensoranordnung 50 umfasst einen Hallsensor 52, eine Hubstange 54 und eine Schraubenfeder 56. Die Schraubenfeder 56 ist an ihrem der Ventilstange 34 abgewandtem Ende an einer ortsfesten Halterung 60 und an ihrem der Ventilstange 34 zugewandtem Ende an einem Hubstangen-Stützring 62 abgestützt. Die Halterung 60 ist an dem Sensorgehäuse 44 befestigt. Der Hubstangen-Stützring 62 ist durch eine Umfangsvergrößerung an der Hubstange 54 gebildet. Die Hubstange 54 ist durch die Schraubenfeder 56 nach unten, in Richtung der Ventilstange 34 bzw. der Kulisse 28 vorgespannt. Die Hubstange 54 liegt in axialer Ausrichtung der Ventilachse 36 auf der Kulisse 28 auf, so dass sich bei einer translatorischen Bewegung der Kulisse 28 bzw. der Ventilstange 34, die Hubstange 54 gleichförmig mitbewegt. Ebenso ist es denkbar, dass die Hubstange 54 und die Kulisse 28 fest miteinander verbunden sind. Der Hallsensor 52 detektiert die Hubbewegung der Hubstange 54 durch Feststellung der An- oder Abwesenheit des Hubstangen-Endes im Detektionsbereich des Hallsensors 52.

Das Sensorgehäuse 44 und das Getriebegehäuse 38 können von einem einzigen Gehäusekörper gebildet werden.

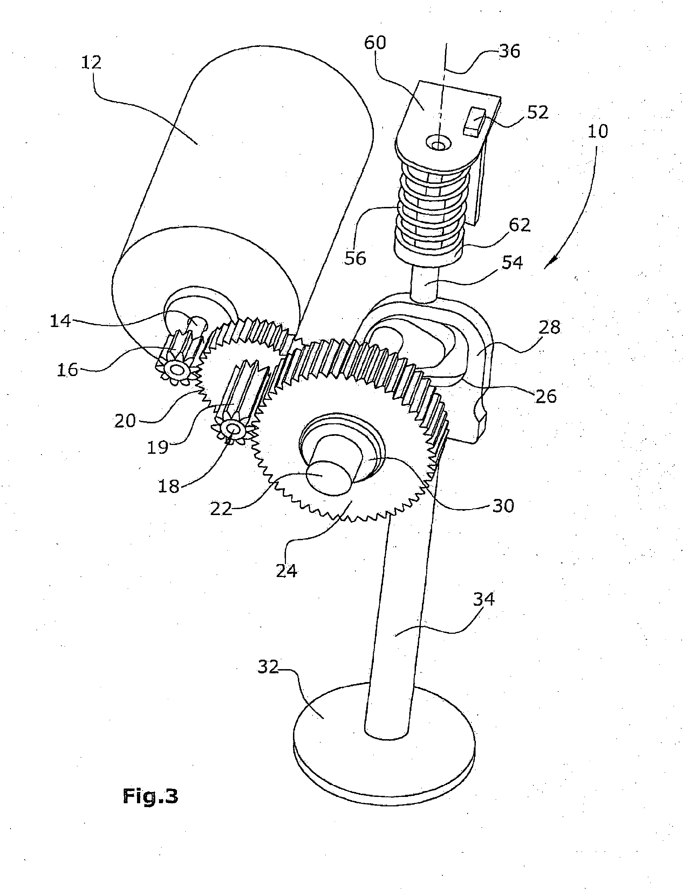

Figur 3 zeigt eine perspektivische Ansicht der Kfz-Abgasrückführungs-Ventilanordnung 10. In Figur 3 ist die aus Figur 1 bereits beschriebene zweistufige gebtriebliche Verbindung zwischen dem Motorritzel 16 und dem Abtriebszahnrad 20 und der Zwischenwelle 18 mit ihrem Zwischenwellenritzel 19 und dem Antriebszahnrad 24 noch einmal gut zu erkennen.

Ferner ist in Figur 3 noch einmal die Exzenterwelle 22, auf der das Antriebszahnrad 24 mit einem Wälzlager 30 fest gelagert ist, dargestellt. Die Exzenterwelle 22 trägt an ihrem dem Ventiltrieb zugewandten Ende den nockenförmigen Exzenter 26.

Auf der Kulisse 28, in die der Exzenter 26 eingreift, liegt die Hubstange 54 in axialer Richtung der Ventilachse 36 derart auf, dass sich bei einer Translationsbewegung der Kulisse 28 bzw. der Ventilstange 34, die Hubstange 54 gleichförmig mitbewegt.

Die Blech-Halterung 60 ist an dem Sensorgehäuse 44, das in Figur 3 nicht darstellt ist, befestigt und weist eine Öffnung auf, durch die die Hubstange 54 bei einer Hubbewegung durchtritt. Des Weiteren ist auf der Halterung 60 der Hallsensor 52 angeordnet, der den Austritt der Hubstange 54 aus der Öffnung detektiert.

Durch die erfindungsgemäße Kfz-Abgasrückführungs-Ventilanordnung wird eine sehr kompakte, modulare und kostengünstige Anordnung zwischen Getriebe, Antriebsmotor und Ventiltrieb realisiert. Dadurch, dass sich der Exzenter und die Kulisse innerhalb der Längserstreckung des Antriebsmotors befinden und sich durch die Anordnung von Getriebe und Antriebsmotor um den Ventiltrieb zusätzlich eine günstige Schwerpunktlage ergibt, wird die Amplitude der Schwingungen in der Kfz-Abgasrückführungs-Ventilanordnung reduziert, wodurch die Anordnung weniger zur Vibration neigt. Dies führt zu weniger Verschleiß aller Bauteile und reduziert die Bruchgefahr insbesondere der Ventilstange, die sich in einer ständigen Translationsbewegung befindet und sich bei Vorbiegung verkanten bzw. verklemmen und in Folge dessen sogar brechen kann.

## Patentansprüche

1. Kfz-Abgasrückführungs-Ventilanordnung (10) für eine Abgasrückführung einer Verbrennungskraftmaschine, mit
einem elektrischen Antriebsmotor (12) mit einer Motorwelle (14) und einem Motorritzel (16),
einer Zwischenwelle (18) mit einem mit dem Motorritzel (16) kämmenden Abtriebszahnrad (20),
einer Exzenterwelle (22) mit einem mit einem Zwischenwellenritzel (19) kämmenden Antriebszahnrad (24) und einem Exzenter (26), und
einem Ventiltrieb mit einem Ventilteller (32), einer Ventilstange (34) und einer Kulisse (28), in die der Exzenter (26) eingreift,
wobei die Zwischenwelle (18) seitlich neben der Exzenterwelle (22) derart angeordnet ist, dass der Exzenter (26) und die Kulisse (28) unmittelbar neben dem Antriebsmotor (12) liegen,
**dadurch gekennzeichnet, dass**
eine Positionssensoranordnung (50), die die Position der Kulisse (28) detektiert, in dem Getriebegehäuse (38) angeordnet ist, das die Zwischenwelle (18) und die Exzenterwelle (22) einschließt, und
die Positionssensoranordnung (50) einen Linearsensor, insbesondere einen Hallsensor (52) aufweist, der die translatorische Position der Kulisse (28) detektiert.

2. Kfz-Abgasrückführungs-Ventilanordnung (10) nach Anspruch 1, wobei die Ventilstange (34) in den mittleren zwei Vierteln der von einem Antriebsmotorgehäuse (40) und einem Getriebegehäuse (38) gebildeten Gesamt-Längserstreckung (58), insbesondere in dem mittleren Drittel angeordnet ist.

3. Kfz-Abgasrückführungs-Ventilanordnung (10) nach einem der vorangegangenen Ansprüche, wobei der radiale Abstand (46) der Ventilstange (34) zum Schwerpunkt der Kfz-Abgasrückführungs-Ventilanordnung (10) geringer als ein Viertel der vom Antriebsmotorgehäuse (40) und dem Getriebegehäuse (38) gebildeten Gesamt-Längserstreckung (58) ist.

## Claims

1. A motor vehicle exhaust gas recirculation valve arrangement (10) for an exhaust gas recirculation system of an internal combustion engine, comprising:
an electric drive motor (12) comprising a motor shaft (14) and a motor pinion (16);
an intermediate shaft (18) comprising an output gear (20) meshing with the motor pinion (16);
an eccentric shaft (22) comprising a drive gear (24) meshing with an intermediate shaft pinion (19), and further comprising an eccentric (26),
and
a valve drive comprising a valve plate (32), a valve rod (34), and a link (28), the link being configured to have the eccentric (26) engage therein,
wherein the intermediate shaft (18) is arranged laterally beside the eccentric shaft (22) so that the eccentric (26) and the link (28) lie directly beside the drive motor (12),
**characterized in that**
a position sensor arrangement (50), which detects a position of the link (28), is arranged in the transmission housing (38) which encloses the intermediate shaft (18) and the eccentric shaft (22), and
the position sensor arrangement (50) comprises a linear sensor, in particular a Hall sensor (52), configured to detect a translational position of the link (28).

2. The motor vehicle exhaust gas recirculation valve arrangement (10) as recited in claim 1, wherein the valve rod (34) is arranged in a middle two quarters of the overall longitudinal dimension (58) formed by a drive motor housing (40) and a transmission housing (38), in particular in a middle third.

3. The motor vehicle exhaust gas recirculation valve arrangement (10) as recited in one of the preceding claims, wherein a radial distance (46) of the valve rod (34) to a center of gravity of the exhaust gas recirculation valve arrangement (10) for motor vehicles is less than a quarter of the overall longitudinal dimension formed by the drive motor housing (40) and the transmission housing (38).

## Revendications

1. Système (10) de soupapes de recyclage de gaz d'échappement d'un véhicule automobile pour le recyclage de gaz d'échappement d'un moteur à combustion interne, comprenant
un moteur d'entrainement électrique (12) avec un arbre moteur (14) et un pignon moteur (16),
un arbre intermédiaire (18) ayant une roue dentée de sortie (20) s'engrenant avec un pignon d'arbre intermédiaire (19), et ayant un excentrique (26), et
une commande de soupape ayant une tête de soupape (32), une tige de soupape (34) et une coulisse (28), dans laquelle s'engage ledit excentrique (26),
ledit arbre intermédiaire (18) étant disposé latéralement à coté dudit arbre de l'excentrique (22) de sorte que l'excentrique (26) et la coulisse (28) sont situés directement à coté du moteur d'entrainement (12),
**caractérisé en ce que**
un ensemble capteur de position (50), détectant la position de la coulisse (28), est disposé dans le carter de transmission (38) qui enferme l'arbre intermédiaire (18) et l'arbre excentrique (22), et
l'ensemble capteur de position (50) comprend un capteur linéaire, notamment un capteur du type Hall (52), détectant la position transitoire de la coulisse (28).

2. Système (10) de soupapes de recyclage de gaz d'échappement d'un véhicule automobile selon la revendication 1, dans lequel la tige de soupape (34) est disposée dans les deux quarts centraux de la longueur totale (58) formée par le carter du moteur d'entrainement (40) et le carter de transmission (38), notamment dans le tiers central.

3. Système (10) de soupapes de recyclage de gaz d'échappement d'un véhicule automobile, selon l'une quelconque des revendications précédentes, dans lequel la distance radiale (46) de la tige de soupape (34) au centre de gravité dudit système (10) de soupapes de recyclage de gaz d'échappement d'un véhicule automobile est inférieure à un quart de la longueur totale (58) formée par le carter du moteur d'entrainement (40) et le carter de transmission (38).
